# EUROPEAN PATENT SPECIFICATION

(11) **EP 1 475 871 B1**
(45) Date of publication and mention of the grant of the patent: **14.01.2009**
(21) Application number: 04010900.1
(22) Date of filing: 07.05.2004
(51) Int. Cl.: H02G 3/32

(54) **Bracket unit for supporting cable-carrier systems in industrial ductings**
Konsolegruppe zum Stützen eines Kabelhalter-Systems für industrielle Kabelkanalsanlage.
Ensemble console pour le support des chemins de câbles dans des systèmes chemins de câbles industriels.

(30) Priority: 09.05.2003 IT TO20030342
(43) Date of publication of application: 10.11.2004
(73) Proprietor: BTICINO S.P.A., 20154 Milano (IT)
(72) Inventor: Spagnoli, Gian Piero, 21051 Arcisate (Varese) (IT); Marengo, Massimo, 15011 Acqui Terme (Alessandria) (IT)
(74) Representative: Deambrogi, Edgardo

(56) References cited:
- FR-A- 2 697 690
- US-A- 4 013 253

## Description

The present invention relates to support systems for cable-carrier channels and trays in industrial ductings, and more specifically to a support bracket unit.

A support bracket for electrical ductings is conventionally obtained by shearing and bending a sheet of plate, and the surface intended to receive, supported on it, the cable-carrier channel, is normally extended by two wings or lateral walls bent at a right angle along the longitudinal edges.

Such brackets are anchored to a load-bearing structure, for example to a wall, directly or by means of anchorage profile sections. In this second case, the profile section is a U-section or C-section, and has a perforated base surface, intended to be secured in a stable manner to the wall or to a similar load-bearing structure by means of plugs, from which base surface a pair of parallel lateral edges extends transversely.

US-A-4 013 253 discloses a bracket supporting arrangement including an elongated section member having a flat central portion and side flanges, arranged to support a bracket with a relatively short vertical portion having a flat intermediate part and side flanges adopted to overlap the side flanges of the section member. The elongated section member has upper and lower tabs projecting from its flat portion, arranged to engage the vertical portion of the bracket. Attachment of the bracket to the section member is accomplished by inserting the bracket vertical portion beneath the upper tab, and arranging the lower tab to engage an opening provided in the intermediate part of said portion, The upper tab includes a bendable end portion, whereby anchorage of the bracket to the section member is achieved by blowing the end portion into a further opening formed into the intermediate part of the vertical portion of the bracket, by means of an extra tool.

According to another prior art embodiment, on the lateral walls of the bracket, at the anchorage end, and on the lateral edges of the profile section, facing fixing holes are provided to allow the introduction of locking members (for example pins or bolts) for fixing the bracket at the level desired or required by the installation configuration along the profile section.

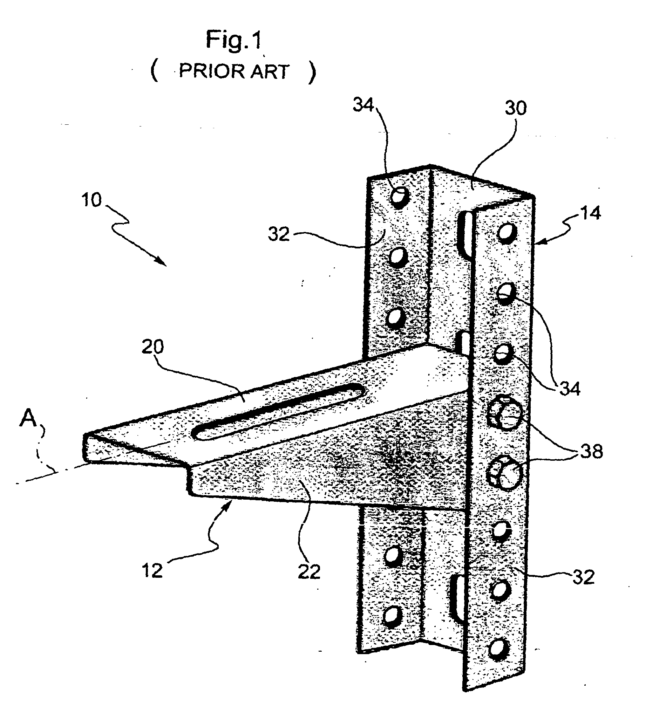

A bracket mounted on an anchorage profile section according to this embodiment is shown in Figure 1.

For the installation of cable-carrier systems where it is not possible to place the brackets against the walls of the premises passed through, it is known to effect suspension from ceilings by means of anchorage plates on which are suspended U-sections disposed in a vertical position for the anchorage of the brackets.

It is known to use brackets of different dimensions and structures for different classes of carrying capacity, generally subdivided into the categories of brackets for light loads and brackets for heavy loads. In the first case the fixing of the bracket to the anchorage profile section is effected simply by bolting, and in the second case by welding.

In both cases, in order to introduce the locking members into the respective fixing holes of the bracket and the profile section, it is necessary for these holes to be aligned, so that the installer is required to seek the alignment position and support the bracket in that position during the assembly operation.

The aim of the present invention is to increase the convenience and the speed of installation. According to the invention, this aim is achieved by means of a bracket unit having the characteristics claimed in claim 1.

The positioning means provided by the bracket unit of the invention facilitate the aligned arrangement of a support bracket on a respective anchorage profile section, by preventing slipping thereof during the locking step, thus allowing the installer to operate with greater freedom.

Advantageously, the solution according to the invention also makes it possible to reduce the number of components in the case of assembly of brackets for heavy loads since, in part, the support of the bracket in the assembled configuration is obtained through the positioning means themselves.

Further characteristics and advantages of the invention will be explained in more detail in the following detailed description, provided by way of non-limiting example with reference to the appended drawings, in which:
Figure 1 is a view of a bracket unit according to the prior art in the assembled state;
Figure 2 is a partial view of a bracket and of an anchorage profile section according to a first embodiment of the invention, before assembly;
Figure 3a is a partial enlarged view of a bracket and of an anchorage profile section in a second embodiment of the invention, also before assembly;
Figure 3b is a complete view of the bracket unit obtained by the coupling of the bracket to the anchorage profile section, shown in Figure 3a;
Figure 4 is a complete view of the bracket unit obtained by the coupling of a bracket for heavy loads to the anchorage profile section shown in Figure 3a;
Figure 5 is a partial enlarged view of a bracket and of an anchorage profile section according to a third embodiment of the invention, before assembly;
Figure 6 is a view which shows the coupling of the bracket and the anchorage profile section, which are shown in Figure 5, in a support system for suspension from the ceiling;
Figure 7 is a view which shows a further solution for the coupling of the anchorage profile section of Figure 5;
Figure 8 is a complete view of the bracket unit obtained by the coupling of the bracket and the anchorage profile section, shown in Figure 3a, in which different locking members are used; and
Figure 8a is an enlarged view of the locking members of Figure 8.

In the figures, 10 indicates a bracket unit comprising a support portion 12 for the cable-carrier systems and an anchorage portion 14 for connection to a load-bearing structure such as a wall or a vertical profile section.

The support portion 12 has a support surface 20 which extends along a longitudinal axis A, and a pair of lateral walls 22 on which, at the anchorage end, there is at least one pair of facing fixing holes 24 intended to receive locking members for locking the portion in an installation configuration.

The anchorage portion 14 is in the form of a U-shaped profile section and has a base surface 30 capable of being placed against the load-bearing structure, and a pair of lateral walls 32 which are disposed transversely with respect to the base surface and on which related facing fixing holes 34 are provided for engagement by the aforesaid locking members.

In Figure 1, 38 indicates two bolts as locking members for locking the parts 12 and 14 to each other.

In the assembled state, the anchorage end of the support portion is partially inserted between the walls 32 of the anchorage portion 14 or vice versa, the anchorage portion 14 is partially inserted between the ends of the lateral walls 22 of the support portion. A configuration of partial overlap is formed between the lateral walls of the two components by the effect of which the walls are mutually constrained in a transverse direction.

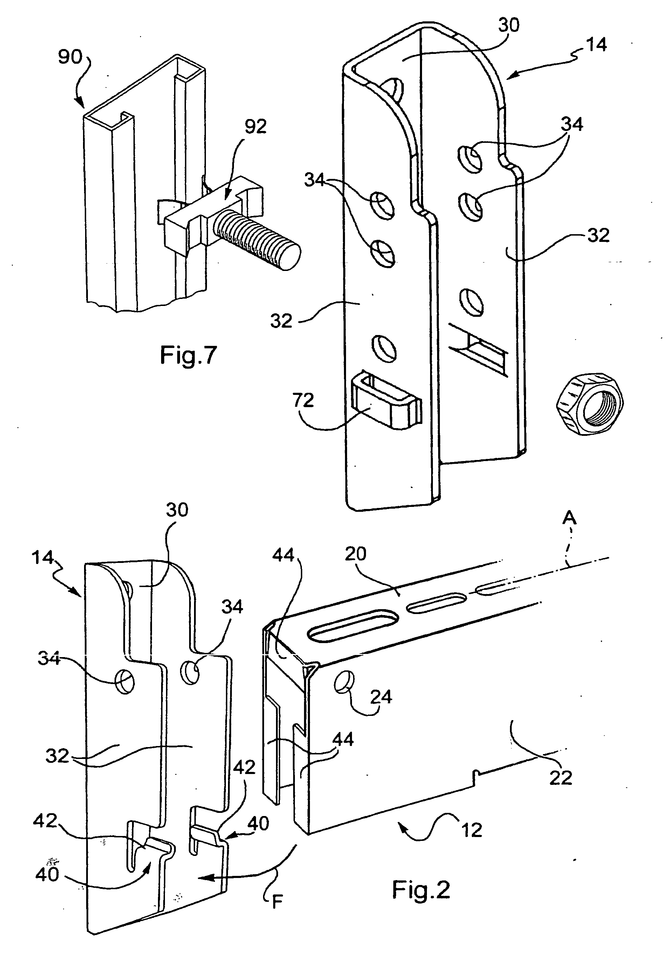

A first embodiment of the invention is shown in Figure 2.

The anchorage profile section 14 has a pair of S-shaped opposed fins 40, obtained integrally with the lateral walls 32 by shearing and bending an area in proximity to the edge. The fins are turned towards the internal space comprised between the lateral walls and form respective bearing surfaces 42 for a section of the longitudinal edges of the lateral walls 22 of the support portion 12.

The support portion, in its turn, has at the anchorage end the transverse profile of the lateral walls 22 and of the support surface 20 provided with tabs 44 bent to form extended abutment surfaces capable of co-operating with the base surface 30 of the anchorage profile section 14.

In a pre-assembly configuration, obtained by coupling the portions as indicated by the arrow F, the support portion 12 is partially inserted between the walls of the anchorage portion 14 (previously fixed to a wall) and positioned so as to bear on the fins 40 which prevent it from slipping downwards or falling by gravity, while the abutment of the tabs 44 on the base surface 30 of the profile section allow the abutment thereof in a longitudinal direction, so as to reach a stable configuration of alignment of the fixing holes 24, 34 of the parts and permit the insertion of the locking members 38.

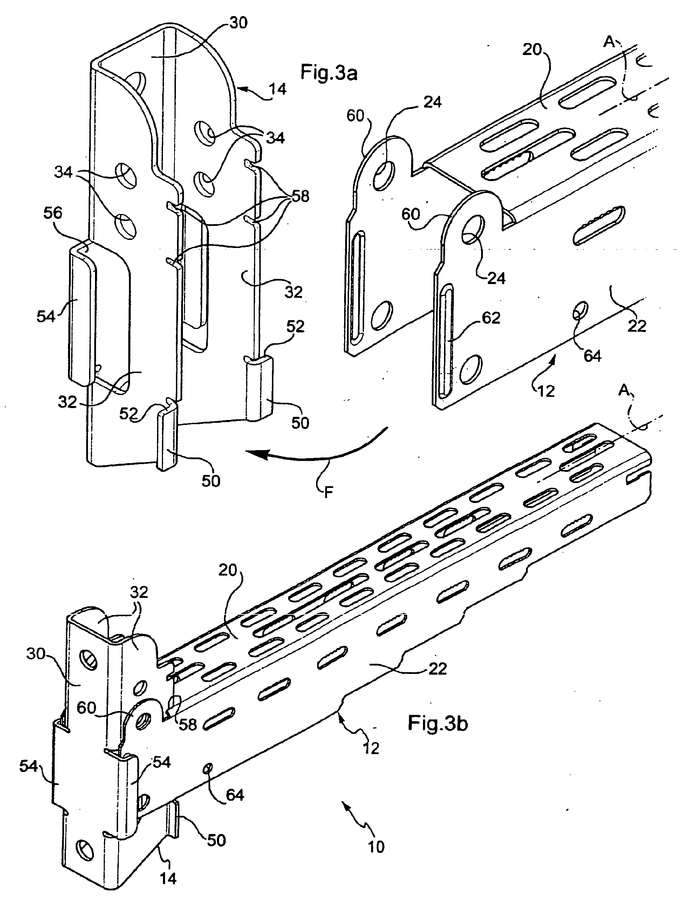

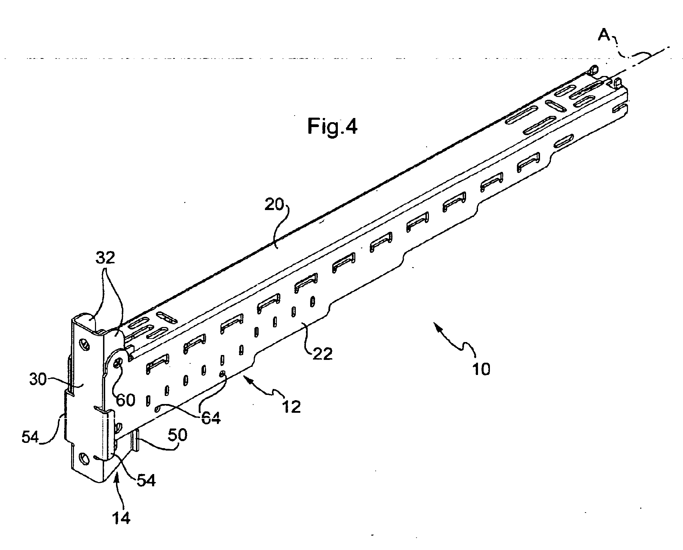

A second embodiment is described with reference to Figures 3a, 3b and 4.

The anchorage profile 14 has a pair of opposed L-shaped fins 50, obtained integrally with the lateral walls 32 in proximity to the edge and bent towards the outside. The upper profile of the fins forms respective bearing points 52 for a section of the longitudinal edges of the lateral walls 22 of the support portion 12. Two L-shaped stop formations 54 are provided outside the shape of the profile section by shearing and bending respective areas of the lateral walls 32, and define respective abutment surfaces in a longitudinal direction 56, coplanar with the base surface 30 of the profile section. The profiles of the lateral walls have two pairs of aligned notches 58. In the figures, two pairs of fixing holes 34 are shown for the mounting of support portions for light or heavy loads.

The support portion 12 has the lateral walls 22 extended rearwards in a longitudinal direction with respect to the support surface 20, and the upper contour of the projecting section is shaped so as to form a pair of lugs 60 in which the fixing holes 24 are formed. A thickening or similar relief 62 is preferably formed on the outer faces of the lateral walls 22 in proximity to the rear end (absent in the variant of Figure 4).

In a pre-assembly configuration, obtained by coupling the portions as indicated by the arrow F, the anchorage profile section 14 (previously fixed to a wall) is partially inserted between the ends of the lateral walls 22 of the support portion 12, and the latter is positioned so as to bear on the fins 50 which prevent it from slipping downwards. The abutment of the rear profiles of the lateral walls 22 on the stop formations 54, and the insertion of the transverse profile of the support surface 20 in a pair of notches 58, make it possible to abut the support portion in a longitudinal direction.

In this way, a stable configuration of alignment of the fixing holes 24, 34 of the parts is obtained, such as to permit easy insertion of the locking members 38.

The lateral walls of the support portion 12 conveniently have, in proximity to the edge, at least one pair of facing holes 64 capable of permitting the introduction of a transverse reinforcing pin (not illustrated) capable of preventing deformation of the structure under load.

Figure 3b shows the pre-assembly configuration (before the introduction of the locking members) of a support portion for light loads, in which the holes 24 provided on the lugs 60 are aligned with the pair of lower holes 34 of the anchorage profile section, and the support surface is inserted into the pair of lower notches 58. Figure 4 shows the pre-assembly configuration of a support portion for heavy loads, in which the upper holes 34 and notches 58 are engaged.

The relief 62 on the outer faces of the lateral walls 22 essentially makes it possible to take up the transverse play and, in certain cases, may also effect a forced insertion of the walls into the space defined between the L-shaped formations 54 and the lateral walls 32 of the anchorage profile, which contributes to the holding of the parts, by friction, in the pre-assembly configuration.

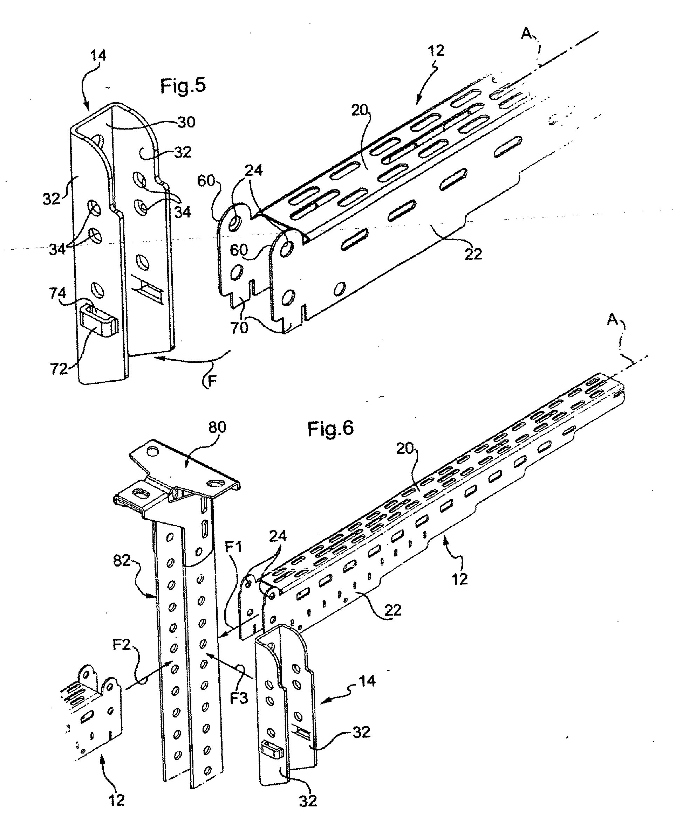

A third embodiment is illustrated in Figure 5.

The support portion 12 has the lateral walls 22 extended rearwards in a longitudinal direction with respect to the support surface 20, and the lower edge of the walls in the protruding section is shaped so as to form a pair of fins 70 coplanar with the walls, facing downwards. The upper contour is still shaped to form a pair of lugs 60 in which the fixing holes 24 are provided.

The anchorage profile section 14 has a pair of loops 72 formed on corresponding faces of the lateral walls 32, which delimit slots 74 capable of receiving, by dovetailing, the fins 70 defined on the lateral walls 22 of the support portion.

In a pre-assembly configuration, obtained by coupling the portions as indicated by the arrow F, the anchorage profile section 14 (previously fixed to a wall) is partially inserted between the ends of the lateral walls 22 of the support portion 12, and the latter is positioned by inserting the fins 70 into the respective slots 74. The dovetailed configuration prevents the portion 12 from slipping downwards or falling by gravity. The abutment of the transverse profile of the support surface 20 on the edges of the lateral walls 32 of the profile section 14 makes it possible to abut the support portion in a longitudinal direction.

In this way, a stable configuration of alignment of the fixing holes 24, 34 of the parts is obtained, such as to permit easy insertion of the locking members 38.

An alternative use of the bracket unit described is presented with reference to Figure 6, which shows a support system for suspension from the ceiling, comprising an anchorage plate 80 on which is hung in a vertical position a perforated U-shaped profile section 82 for the anchorage of one or more brackets 12.

The support portion 12 is shaped in such a way as to be able to be coupled directly to the vertical profile section 82 in the directions indicated by the arrows F1 and F2. The rear end engages externally on the profile section, overlapping its lateral walls, and may be mounted thereon at the desired level by seeking the position of alignment of the fixing holes. In this case the assembly operation is carried out by supporting the bracket in such a position.

The complete bracket unit (only the anchorage portion of which is shown in the figure) may also be mounted on a side of the profile section 82 by presenting the anchorage portion in the direction indicated by the arrow F3, and by fixing it by bolting through the holes arranged on its base surface.

Although an anchorage portion 14 of the bracket unit according to the third embodiment described is shown in the figure, it is of course possible to utilise the same configuration with any of the bracket units described and other equivalents based on the same constructive principle.

Finally, figure 7 shows a further form of use of the bracket units of the invention, specifically for installation on low-profile C-section anchorage profile sections 90 unsuitable for receiving directly a support portion of the type described. In this case, the fixing of the anchorage portion 14 of the bracket unit to the load-bearing structure is obtained, for example, by means of a T-head bolt 92 capable of engaging in the groove of the profile section.

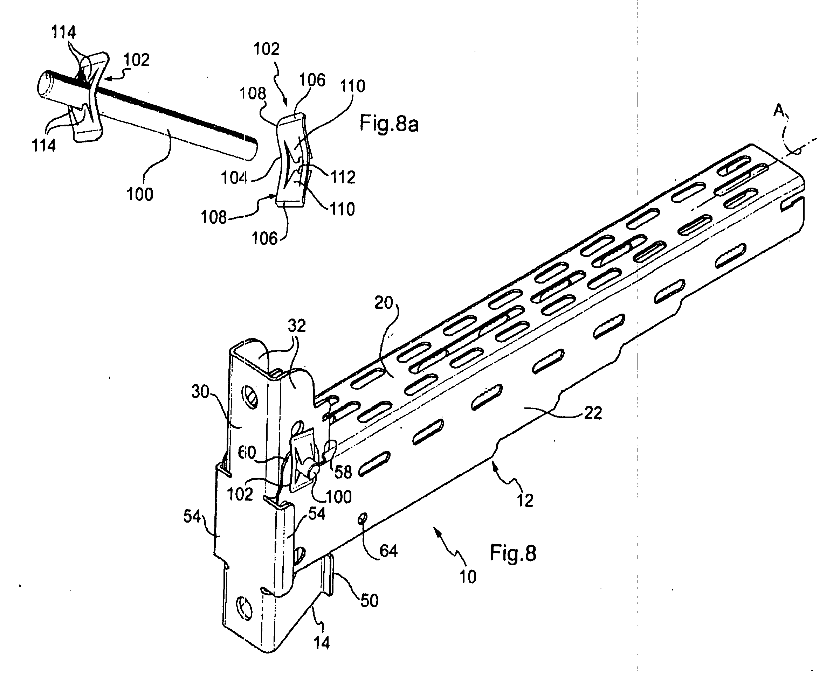

Figure 8 shows an alternative solution for the locking of the support portion 12 on the anchorage portion 14, in place of the conventional bolts.

The locking members (illustrated in more detail in Figure 8a, in a partially exploded view) comprise a pin 100, capable of engaging the aligned fixing holes 24, 34 of the two portions, and a pair of steel leaf springs 102, capable of bearing on the outer surface of the lateral wall 22 of the support portion of the bracket unit (or of the anchorage portion in the configuration in Figure 2) in the area surrounding the fixing hole, and of holding the pin in position.

The pin 100 can be produced with a smooth or threaded lateral surface.

The leaf springs 102 may be produced by shearing and bending a single piece of metal plate of substantially rectangular shape. The rectangular thin plate includes a central curved portion 104, from the ends of which extend two wings 106 bent in the opposite direction so as to form with the central portion a pair of bearing corner edges 108, intended to press on the outer surface of the lateral wall of the assembled bracket unit.

In the central portion 104 are two opposed flat tongues 110, obtained by shearing, the roots of which are formed in proximity to the wings 106, and the free ends of which face, and are separated from, each other so as to form an aperture 112 for the passage of the pin. These ends are cut in a V-shape and each has a pair of teeth 114 capable of engaging the lateral surface of the pin.

To lock the bracket unit in position, the pin 100 is introduced through the fixing holes 24, 34 and the springs 102 are slipped onto the pin with the concavity facing towards the lateral wall of the bracket unit, until the bearing corner edges 108 of the thin plate are brought into abutment against the outer surface of the lateral wall of the bracket unit.

The teeth 114, engaging on the lateral surface of the pin, hold it in the inserted position, preventing it from slipping out accidentally.

Advantageously, this simple solution offers greater ease and speed of assembly compared with the conventional solution, and a limited cost.

It should be noted that the embodiments proposed by the present invention in the foregoing explanation are purely exemplary and non-limiting examples of the present invention. An expert in the field will easily be able to implement the invention in different embodiments which do not however depart from the principles disclosed herein, and are therefore included within the scope of protection defined by the appended claims.

## Claims

1. A bracket unit for supporting cable-carrier systems in industrial ductings, comprising:
a support portion (12) having a support surface (20) for cable-carrier channels or trays which extends along a longitudinal axis (A), and a pair of lateral walls (22) which have, at a longitudinal end, at least one pair of facing fixing holes (24) intended to receive locking means (38) for locking said portion (12) in an installation configuration; and
an anchorage portion (14) for anchorage to a vertical load-bearing structure, having a base surface (30) capable of being placed against said structure and a pair of lateral walls (32) which are disposed transversely with respect to the base surface (30) and which have related facing fixing holes (34) for engagement by said locking means (38),
the aforesaid support and anchorage portions (12, 14) being intended to reach an assembly configuration in which said end of the support portion (12) is partially inserted between the walls (32) of the anchorage portion (14), or vice versa, effecting a partial overlap between the respective lateral walls (22, 32) by the effect of which the support and anchorage portions (12, 14) are mutually constrained in a transverse direction,
the bracket unit further including positioning means (40-44; 50-58; 70-74) for positioning the support portion (12) with respect to the anchorage portion (14) in a substantially stable pre-assembly position in which the respective fixing holes (24, 34) are aligned, said positioning means (40-44; 50-58; 70-74) being arranged to prevent the relative displacement of said portions (12, 14) in at least one direction of movement in a vertical direction and in at least one direction of movement in a longitudinal direction, so as to permit the insertion of the locking means (38) into the fixing holes (24, 34).

2. A bracket unit according to claim 1, **characterised in that** the anchorage portion (14) has support means (40; 50; 72) integral with its lateral walls (32) and capable of providing a bearing point (42; 52) for the lateral walls (22) of the support portion (12), along a section of the longitudinal edges, and
**in that** the support portion (12) has at least one surface (44) or a profile in a a transverse plane which are capable of co-operating in abutment with the base surface (30) of the anchorage portion (14) or with a stop formation (54) coplanar therewith or parallel thereto, or with the profile of the related lateral walls (32).

3. A bracket unit according to claim 2, **characterised in that** the support means of the anchorage portion (14) comprise shaped supporting fins (40; 50) obtained by shearing and bending an area in proximity to the edge of the lateral walls (32) of said portion (14).

4. A bracket unit according to claim 2, **characterised in that** the support means of the anchorage portion (14) comprise loops (72) formed on corresponding faces of the lateral walls (32) which delimit slots (74) capable of receiving, by dovetailing, respective fins (70) defined on the lateral walls (22) of the support portion (12).

5. A bracket unit according to claim 2, **characterised in that** the edges of the lateral walls (32) of the anchorage portion (14) have at least one pair of aligned notches (58) capable of receiving, by insertion, the transverse profile of the support surface (20) of the support portion (12).

6. A bracket unit according to any one of the preceding claims, **characterised in that** the lateral walls (22) of the (anchorage) support portion have on corresponding faces a thickening (62) capable of forming a contact with the respective overlapped faces of the lateral walls (32) of the (support) anchorage portion.

7. A bracket unit according to any one of the preceding claims, **characterised in that** the lateral walls (22) of the support portion (12) have, in proximity to the edge, at least one pair of facing holes (64) capable of allowing the introduction of a transverse reinforcing pin capable of preventing deformation of the structure under load.

8. A bracket unit according to any one of the preceding claims, wherein the lateral walls (32) of the anchorage portion (14) have a plurality of facing fixing holes (34) for the engagement of the locking means (38) of different support portions (12) for classes of load-bearing capacity.

9. A bracket unit according to any one of the preceding claims, wherein said locking means comprise a pin (100) capable of engaging the aligned fixing holes (24, 34) of the two portions, and a pair of retaining devices in the form of resiliently deformable arcuate thin plates (102) provided with a central aperture, and capable of being slipped onto the pin and of pressing in abutment on the lateral wall of the outer portion of the assembled unit, said thin plates having retaining teeth formed on the contour of the central aperture and facing towards the inside so as to engage the lateral surface of the pin, preventing translation thereof in an axial direction.

10. A bracket unit according to claim 9, wherein said pin (100) has a threaded lateral surface.

## Patentansprüche

1. Trägereinheit zum Halten von Kabelträgersystemen in industriellen Kabelführungen, umfassend:
einen Stützabschnitt (12), der eine Stützfläche (20) für Kabelträgerkanäle oder -wannen, die sich entlang einer Längsachse (A) erstreckt, aufweist, sowie ein Paar von Seitenwänden (22), die an einem Längsende mindestens ein Paar von gegenüberliegenden Befestigungslöchern (24) aufweisen, die dazu bestimmt sind, Verriegelungsmittel (38) zum Verriegeln des Abschnitts (12) in einer Aufstellungskonfiguration aufzunehmen; und
einen Verankerungsabschnitt (14) zur Verankerung an einer vertikalen tragenden Struktur, welcher eine Grundfläche (30) aufweist, die an diese Struktur angelegt werden kann, sowie ein Paar von Seitenwänden (32), die quer zur Grundfläche (30) angeordnet sind und zugehörige gegenüberliegende Befestigungslöcher (34) zum Eingriff durch die Verriegelungsmittel (38) aufweisen,
wobei die besagten Stütz- und Verankerungsabschnitte (12, 14) dazu bestimmt sind, eine Montagekonfiguration zu erreichen, in der das Ende des Stützabschnitts (12) zwischen den Wänden (32) des Verankerungsabschnitts (14) teilweise eingefügt ist oder umgekehrt, was eine teilweise Überlappung zwischen den jeweiligen Seitenwänden (22, 32) bewirkt, wobei infolge dieses Effekts die Stütz- und Verankerungsabschnitte (12, 14) in Querrichtung wechselseitig behindert werden,
wobei die Trägereinheit weiters Positioniermittel (40-44; 50-58; 70-74) zum Positionieren des Stützabschnitts (12) in einer in Bezug auf den Verankerungsabschnitt (14) im Wesentlichen stabilen Vormontageposition umfasst, in welcher die jeweiligen Befestigungslöcher (24, 34) fluchtend sind, wobei die Positioniermittel (40-44; 50-58; 70-74) dazu angeordnet sind, die relative Verschiebung der Abschnitte (12, 14) in mindestens einer Bewegungsrichtung in vertikaler Richtung und in mindestens einer Bewegungsrichtung in Längsrichtung zu verhindern, um das Einführen der Verriegelungsmittel (38) in die Befestigungslöcher (24, 34) zu ermöglichen.

2. Trägereinheit gemäß Anspruch 1, **dadurch gekennzeichnet, dass** der Verankerungsabschnitt (14) Halterungsmittel (40; 50; 72) aufweist, die in seinen Seitenwänden (32) integriert sind und imstande sind, eine Auflagerstelle (42; 52) für die Seitenwände (22) des Stützabschnitts (12) entlang eines Abschnitts der Längskanten bereitzustellen, und
dass der Stützabschnitt (12) mindestens eine Fläche (44) oder ein Profil in einer Querebene aufweist, die bzw. das imstande ist, mit der Grundfläche (30) des Verankerungsabschnitts (14) oder mit einem dazu koplanaren oder parallelen Anschlagprofil (54) oder mit dem Profil der zugehörigen Seitenwände (32) als Widerlager zusammenzuwirken.

3. Trägereinheit gemäß Anspruch 2, **dadurch gekennzeichnet, dass** die Halterungsmittel des Verankerungsabschnitts (14) ausgeformte Stützrippen (40; 50) umfassen, die durch Scherung und Biegung eines Bereichs in der Nähe der Kante der Seitenwände (32) des Abschnitts (14) erhalten werden.

4. Trägereinheit gemäß Anspruch 2, **dadurch gekennzeichnet, dass** die Halterungsmittel des Verankerungsabschnitts (14) Schlaufen (72) umfassen, die an entsprechenden Flächen der Seitenwände (32) gebildet sind und Schlitze (74) abgrenzen, die imstande sind, die entsprechenden, an den Seitenwänden (22) des Stützabschnitts (12) definierten Rippen (70) durch Verzinkung aufzunehmen.

5. Trägereinheit gemäß Anspruch 2, **dadurch gekennzeichnet, dass** die Kanten der Seitenwände (32) des Verankerungsabschnitts (14) mindestens ein Paar von fluchtenden Kerben (58) aufweisen, die imstande sind, das Querprofil der Stützfläche (20) des Stützabschnitts (12) durch Einschieben aufzunehmen.

6. Trägereinheit gemäß einem der vorhergehenden Ansprüche, **dadurch gekennzeichnet, dass** die Seitenwände (22) des (Verankerungs)-Stützabschnitts an den entsprechenden Flächen eine Verdickung (62) aufweisen, die imstande ist, einen Kontakt mit den jeweiligen überlappten Flächen der Seitenwände (32) des (Stütz)-Verankerungsabschnitts zu bilden.

7. Trägereinheit gemäß einem der vorhergehenden Ansprüche, **dadurch gekennzeichnet, dass** die Seitenwände (22) des Stützabschnitts (12) in der Nähe der Kante mindestens ein Paar von gegenüberliegenden Löchern (64) aufweisen, die imstande sind, das Einführen eines verstärkenden Querstifts zu ermöglichen, der imstande ist, eine Verformung der Struktur unter Beanspruchung zu verhindern.

8. Trägereinheit gemäß einem der vorhergehenden Ansprüche, wobei die Seitenwände (32) des Verankerungsabschnitts (14) eine Mehrzahl von gegenüberliegenden Befestigungslöchern (34) für den Eingriff der Verriegelungsmittel (38) verschiedener Stützabschnitte (12) für Kategorien der Tragfähigkeit aufweisen.

9. Trägereinheit gemäß einem der vorhergehenden Ansprüche, wobei die Verriegelungsmittel einen Stift (100) umfassen, der imstande ist, in die fluchtenden Befestigungslöcher (24, 34) der beiden Abschnitte einzugreifen, sowie ein Paar von Haltevorrichtungen in Form von elastisch verformbaren gebogenen dünnen Platten (102), die mit einer zentralen Öffnung versehen sind und imstande sind, auf den Stift geschoben zu werden und als Widerlager auf die Seitenwand des Außenabschnitts der montierten Einheit zu drücken, wobei die dünnen Platten Haltezacken aufweisen, die an der Umrisslinie der zentralen Öffnung gebildet und nach innen gerichtet sind, um in die Seitenfläche des Stifts einzugreifen, wodurch dessen Verschiebung in axialer Richtung verhindert wird.

10. Trägereinheit gemäß Anspruch 9, wobei der Stift (100) eine Seitenfläche mit Gewinde aufweist.

## Revendications

1. Unité à console destinée à supporter des systèmes portant des câbles dans des conduits industriels, comportant :
une partie de support (12) ayant une surface de support (20) pour des gouttières ou plateaux supportant des câbles, qui s'étend le long d'un axe longitudinal (A), et une paire de parois latérales (22) qui ont, à une extrémité longitudinale, au moins une paire de trous opposés (24) de fixation destinés à recevoir des moyens de blocage (38) pour bloquer ladite partie (12) dans une configuration d'installation ; et
une partie d'ancrage (14) destinée à être ancrée à une structure de charge verticale, ayant une surface de base (30) pouvant être placée contre ladite structure et une paire de parois latérales (32) qui sont disposées transversalement par rapport à la surface de base (30) et qui présentent des trous associés et opposés (34) de fixation pour un engagement avec lesdits moyens de blocage (38),
les parties précitées de support et d'ancrage (12, 14) étant prévues pour atteindre une configuration d'assemblage dans laquelle ladite extrémité de la partie de support (12) est partiellement insérée entre les parois (32) de la partie d'ancrage (14), ou vice versa, réalisant un chevauchement partiel entre les parois latérales respectives (22, 32) par l'effet duquel les parties de support et d'ancrage (12, 14) sont maintenues mutuellement dans une direction transversale,
l'unité à console comprenant en outre des moyens de positionnement (40-44 ; 50-58 ; 70-74) pour le positionnement de la partie de support (12) par rapport à la partie d'ancrage (14) dans une position de préassemblage sensiblement stable dans laquelle les trous respectifs (24, 34) de fixation sont alignés, lesdits moyens de positionnement (40-44 ; 50-58 ; 70-74) étant agencés pour empêcher le déplacement relatif desdites parties (12, 14) dans au moins une direction de mouvement dans une direction verticale et dans au moins une direction de mouvement dans une direction longitudinale, afin de permettre l'insertion des moyens de blocage (38) dans les trous de fixation (24, 34).

2. Unité à console selon la revendication 1, **caractérisée en ce que** la partie d'ancrage (14) comporte des moyens de support (40 ; 50 ; 72) réalisés d'une seule pièce avec ses parois latérales (32) et capables de procurer un point d'appui (42 ; 52) pour les parois latérales (22) de la partie de support (12), le long d'une section des bords longitudinaux, et
**en ce que** la partie de support (12) présente au moins une surface (44) ou un profil, dans un plan transversal, qui sont capables de coopérer en appui avec la surface de base (30) de la partie d'ancrage (14) ou avec une formation de butée (54) qui en est coplanaire ou lui est parallèle, ou avec le profil des parois latérales associées (32).

3. Unité à console selon la revendication 2, **caractérisée en ce que** les moyens de support de la partie d'ancrage (14) comprennent des ailettes configurées (40 ; 50) de support obtenues par cisaillage et pliage d'une zone à proximité du bord des parois latérales (32) de ladite partie (14).

4. Unité à console selon la revendication 2, **caractérisée en ce que** les moyens de support de la partie d'ancrage (14) comprennent des boucles (72) formées sur des faces correspondantes des parois latérales (32) qui délimitent des fentes (74) pouvant recevoir, par ajustement en queue d'aronde, des ailettes respectives (70) définies sur les parois latérales (22) de la partie de support (12).

5. Unité à console selon la revendication 2, **caractérisée en ce que** les bords des parois latérales (32) de la partie d'ancrage (14) ont au moins une paire d'encoche alignées (58) capables de recevoir, par insertion, le profil transversale de la surface de support (20) de la partie de support (12).

6. Unité à console selon l'une quelconque des revendications précédentes, **caractérisée en ce que** les parois latérales (22) de la partie de support (d'ancrage) ont, sur des faces correspondantes, un épaississement (62) capable de former un contact avec les faces respectives en chevauchement des parois latérales (32) de la partie d'ancrage (de support).

7. Unité à console selon l'une quelconque des revendications précédentes, **caractérisée en ce que** les parois latérales (22) de la partie de support (12) ont, à proximité du bord, au moins une paire de trous opposés (64) capables de permettre l'introduction d'une broche transversale de renfort pouvant empêcher la déformation de la structure sous une charge.

8. Unité à console selon l'une quelconque des revendications précédentes, dans laquelle les parois latérales (32) de la partie d'ancrage (14) présentent de multiples trous opposés (34) de fixation pour l'engagement des moyens de blocage (38) de différentes parties de support (12) pour des classes de capacité de charge.

9. Unité à console selon l'une quelconque des revendications précédentes, dans laquelle lesdits moyens de blocage comprennent une broche (100) capable d'engager les trous alignés (24, 34) de fixation des deux parties, et une paire de dispositifs de retenue sous la forme de minces plaques courbes (102), déformables élastiquement, pourvues d'une ouverture centrale, et pouvant être glissés sur la broche et amenés en appui sous pression sur la paroi latérale de la partie extérieure de l'unité assemblée, lesdites plaques minces ayant des dents de retenue formées sur le contour de l'ouverture centrale et tournées vers l'intérieur afin d'engager la surface latérale de la broche, empêchant sa translation dans une direction axiale.

10. Unité à console selon la revendication 9, dans laquelle ladite broche (100) présente une surface latérale filetée.
